# EUROPÄISCHE PATENTANMELDUNG

(11) **EP 3 366 494 A1**
(43) Veröffentlichungstag der Anmeldung: **29.08.2018**
(21) Anmeldenummer: 18151544.6
(22) Anmeldetag: 15.01.2018
(51) Int. Cl.: B60C 11/12

(54) **FAHRZEUGREIFEN**

(30) Priorität: 27.02.2017 DE 102017203166
(71) Anmelder: Continental Reifen Deutschland GmbH, 30165 Hannover (DE)
(72) Erfinder: Jackstadt, Michael, 30989 Gehrden (DE); Seng, Matthias, 30453 Hannover (DE); Wirth, Christian, 31535 Neustadt (DE)
(74) Vertreter: Finger, Karsten

(57) **Zusammenfassung**

Laufstreifenprofil eines Fahrzeugreifens mit durch Rillen (7,8) begrenzten Profilelementen (13) und mit Feineinschnitten (15), die mit voneinander, vom Einschnitttgrund (20) und von der radial äußeren Oberflächen (17) beabstandeten, begrenzten Erstreckungsabschnitten ausgebildet sind, in denen der Feineinschnitt (15) mit einer vergrößerten Dicke ausgebildet ist, wobei der begrenzte Erstreckungsabschnitt jeweils durch eine in einer (18) der beiden Einschnittwände (18,19) in radialer Richtung R erstreckte Nut (21) mit einer Erstreckungslänge H₂ ausgebildet ist, die sich in radialer Richtung R nach außen bis in eine Position im Abstand H₁ > 0 von der radial äußeren Oberfläche (17) erstreckt und dort endet, wobei die Nut (21) mit einer senkrecht zur Einschnittwand (18) gemessenen, längs der Erstreckung der Nut (21) veränderten Tiefe T ausgebildet ist, wobei die Nut (21) mit einem radial inneren Erstreckungsabschnitt, in welchem die Tiefe T längs der Erstreckung der Nut (21) von radial innen nach außen hin von T=0 bis zur Erreichung der maximalen Tiefe T_{MAX} stetig zunimmt, und mit einem radial äußeren Erstreckungsabschnitt, in welchem die Tiefe T längs der Erstreckung der Nut (21) von radial innen nach außen hin von der Position ihrer maximalen Tiefe T_{MAX} bis zur Erreichung der Tiefe T=0 im Abstand H₁ von der radial äußeren Oberfläche (17) stetig abnimmt.

## Beschreibung

Die Erfindung betrifft ein Laufstreifenprofil eines Fahrzeugreifens - insbesondere eines PKW-Fahrzeugreifens - mit durch Rillen begrenzten Profilelementen und mit in Profilelementen ausgebildeten Feineinschnitten, wobei die Profilelemente in radialer Richtung R nach außen hin von einer radial äußeren Oberfläche und die Feineinschnitte nach radial innen hin von einem Einschnittgrund und beiderseits des Einschnittgrunds jeweils von einer Einschnittwand begrenzt werden, wobei der Feineinschnitt jeweils mit einer Dicke D ausgebildet ist, mit Feineinschnitten, die mit voneinander, vom Einschnitttgrund und von der radial äußeren Oberfläche beabstandet angeordneten, begrenzten Erstreckungsabschnitten ausgebildet sind, in denen der Feineinschnitt mit einer vergrößerten Dicke D' ausgebildet ist, wobei der begrenzte Erstreckungsabschnitt jeweils durch eine in einer der beiden Einschnittwände in radialer Richtung R erstreckte Nut mit einer in radialer Richtung R in der Einschnittwand gemessenen Erstreckungslänge H₂ ausgebildet ist, die sich in radialer Richtung R nach außen in der Einschnittwand bis in eine Position im Abstand H₁ > 0 von der radial äußeren Oberfläche erstreckt und dort endet.

Derartige Fahrzeugluftreifen sind bekannt.

Es ist bekannt, Laufstreifenprofile von Pkw-Fahrzeugluftreifen zur Erzielung guter Griffeigenschaften auf Schnee und Eis und somit zur Erzielung guter Wintergriffeigenschaften mit Feineinschnitten in den durch Rillen begrenzten Profilblockelementen auszubilden. Die Feineinschnitte wiesen dabei zusätzliche Griffkanten für besseren Griff auf Schnee und Eis auf. Beim Abrollen wird durch Öffnen und Schließen der Feineinschnitte zusätzlich Schnee bzw. Matsch eingeschlossen, wodurch auch der Schnee-Schneegriff verbessert wird. Die üblichen Feineinschnitte sind dabei mit korrespondierend zueinander ausgebildeten Einschnittswänden mit im wesentlichen gleicher Feineinschnittdicke ausgebildet, die für den Einsatz im winterlichen Betrieb optimiert sind.

Derartige übliche Winterreifen mit Feineinschnitten weisen keine zusätzliche Kühlung aus dem Profilinneren auf. Beim Einsatz derartiger, für den Winterbetrieb optimierter Reifen bei oberhalb von winterlichen Temperaturen bedingten Einsatzbedingungen steigen die im Betrieb im Reifen auftretenden Temperaturen, wodurch auch Abrieb und Fahreigenschaften mit beeinflusst werden. Daher ist es wünschenswert, gerade für einen Einsatz bei höheren, eher sommerlichen Temperaturen zur Reduktion der temperaturbedingten Nachteile die im Reifenprofil erzeugten Temperaturen durch gezielte Kühlung im Laufstreifenprofil zu reduzieren.

Es ist auch bekannt, zur Erhöhung der Steifigkeit von Profilblockelementen von Winterreifen die Feineinschnitte der Profilblockelemente mit einer dreidimensionalen Struktur auszubilden, wobei die beiden den Feineinschnitt begrenzenden Einschnittwände mit einem im Wesentlichen korrespondierenden Erstreckungsverlauf ausgebildet sind.

Auch die bekannten dreidimensionalen Feineinschnitte sind im Wesentlichen für den winterlichen Betrieb ausgebildet. Die dünnen Feineinschnitte mit ihrer dreidimensionalen Struktur sind dabei für zusätzliche Kühlung nicht geeignet. Um in diesen Feineinschnitten Kühleffekte wirksam werden zu lassen, müssten diese Feineinschnitte mit großer Dicke ausgebildet werden, wodurch jedoch ihre Versteifungswirkung und somit die Wintereignung wieder reduziert würde. Der durch den Feineinschnitt erzielte Negativanteil des Profils würde somit deutlich erhöht werden, wodurch auch die Abriebeigenschaften zusätzlich negativ beeinflusst werden könnten.

Aus der DE 10 2010 012 595 A1 ist es bekannt, bei einem Laufstreifenprofil, bei dem der Kanteneffekt und der Drainage-Effekt auf vereisten Straßenoberflächen verbessert werden soll, Feineinschnitte auszubilden, in denen in den Einschnittwänden in radialer Richtung erstreckte nutförmige Vertiefungen ausgebildet sind, die in einer Position unterhalb der radial äußeren Oberfläche enden. Die nutförmigen Vertiefungen sind dabei längs ihrer radialen Erstreckung mit einer konstanter Tiefe ausgebildet. In einer anderen Ausführung sind die nutförmigen Vertiefungen längs ihrer radialen Erstreckung nach radial innen hin mit einer größer werdenden Tiefe ausgebildet.

Auch wenn durch derartige Vertiefungen im Feineinschnitt zusätzliche Oberflächen geschaffen werden, ist durch die sprunghaften Übergänge zur Einschnittswand nach radial außen und nach radial innen hin die Strömung und somit das Ableiten von warmer Luft beeinträchtigt. Der unstete, absatzartige Übergang nach radial außen hin beeinträchtigt die Herstell- und Ausformbarkeit derartiger Nuten. Die zur Ausformung erforderliche Formrippe in der Vulkanisationsform ermöglicht aufgrund des Hinterschnittes ein leichtes Einreißen und Abreißen des Gummimaterials bei deren Entfernung. Mit zunehmendem Abrieb des Profils über die Lebensdauer des Reifens kann an beiden Erstreckungsenden der Nut ein regelrechtes Abreißen und ein Materialabbruch auftreten. Das Abriebsbild wird durch derartiges zufälliges, plötzliches Abreißen zusätzlich negativ beeinflusst. Dieser negative Effekt wirkt sich besonders an der radial inneren Übergangskante stark aus.

Aus der WO 2016/0533 07 A1 ist es bekannt, Feineinschnitte an ihrem radial inneren Erstreckungsende mit kanalförmigen Durchgangsöffnungen auszubilden. Zur Versteifung der zur Erzeugung dieser Feineinschnitte erforderlichen Lamellenbleche werden diese Lamellenbleche durch zusätzliche Rippen verstärkt, wobei diese Rippen nach radial innen hin bis zum Formteil zur Ausformung der rohrförmigen Verdickung hin kontinuierlich breiter wird und mit dem breitesten Querschnitt auf das Formteil zur Ausformung der rohrförmigen Verdickung trifft. Der durch diese Ausbildung erzeugte Feineinschnitt weist dann in der Einschnittwand in radialer Richtung erstreckte Vertiefungen auf, die in radialer Richtung nach innen hin immer größer werden und ihre größte Breite an der Einmündung in die den Feineinschnitt nach radial innen hin begrenzende kanalförmige Durchgangsöffnung aufweist. Zwar können diese Feineinschnitte durch diese Ausbildung der Rippen vermutlich entformt werden. Der schlagartige Übergang in einen anderen Querschnitt ist bei dieser Ausführung dennoch am radial inneren Erstreckungsende des Feineinschnitts und der durch die Rippen erzeugten Nuten am Übergang zum Kanal gegeben. Durch diese Ausbildung des Feineinschnitts wird die Entwässerung des Laufstreifenprofils über die Lebensdauer hinweg möglicherweise verbessert. Allerdings führt der erzeugte Materialüberhang oberhalb des Kanals zur Erhöhung der Blockkompression des Profilblockementes, wodurch der Rollwiderstand negativ beeinflusst wird.

Der Erfindung liegt daher die Aufgabe zugrunde, derartige Laufstreifenprofile mit Feineinschnitten zu ermöglichen, bei denen trotz geringem Void, gute Abriebeigenschaften und Kühleffekte des Laufstreifenprofils bei guter Entformbarkeit und Rollwiderstand ermöglicht wird.

Die Aufgabe wird erfindungsgemäß durch die Ausbildung eines Laufstreifenprofils eines Fahrzeugreifens - insbesondere eines PKW-Fahrzeugreifens - mit durch Rillen begrenzten Profilelementen und mit in Profilelementen ausgebildeten Feineinschnitten, wobei die Profilelemente in radialer Richtung R nach außen hin von einer radial äußeren Oberfläche und die Feineinschnitte nach radial innen hin von einem Einschnittgrund und beiderseits des Einschnittgrunds jeweils von einer Einschnittwand begrenzt werden, wobei der Feineinschnitt jeweils mit einer Dicke D ausgebildet ist, mit Feineinschnitten, die mit voneinander, vom Einschnitttgrund und von der radial äußeren Oberflächen beabstandet angeordneten, begrenzten Erstreckungsabschnitten ausgebildet sind, in denen der Feineinschnitt mit einer vergrößerten Dicke D' ausgebildet ist, wobei der begrenzte Erstreckungsabschnitt jeweils durch eine in einer der beiden Einschnittwände in radialer Richtung R erstreckte Nut mit einer in radialer Richtung R in der Einschnittwand gemessenen Erstreckungslänge H₂ ausgebildet ist, die sich in radialer Richtung R nach außen in der Einschnittwand bis in eine Position im Abstand H₁ > 0 von der radial äußeren Oberfläche erstreckt und dort endet, gemäß den Merkmalen von Anspruch 1 gelöst, bei dem die Nut mit einer senkrecht zur Einschnittwand gemessenen, längs der Erstreckung der Nut veränderten Tiefe T ausgebildet ist, wobei die Nut mit einem radial inneren Erstreckungsabschnitt, in welchem die Tiefe T längs der Erstreckung der Nut von radial innen nach außen hin von T=0 bis zur Erreichung der maximalen Tiefe T_{MAX} stetig zunimmt, und mit einem radial äußeren Erstreckungsabschnitt, in welchem die Tiefe längs der Erstreckung der Nut von radial innen nach außen hin von der Position ihrer maximalen Tiefe T_{MAX} bis zur Erreichung der Tiefe T=0 im Abstand H₁ von der radial äußeren Oberfläche stetig abnimmt.

Durch diese Ausbildung wird es ermöglicht, dass Neureifen mit ihrer hohen Profiltiefe und der damit verbundenen relativ großen Flexibilität der Profilelemente weiterhin mit für sehr guten Griff auf Schnee und Eis optimiertem Verlauf der Griffkanten der Feineinschnitte ausgebildet werden können. Trotz großer Profiltiefe und hoher Flexibilität der Profilelemente wird somit gute Griffwirkung mit geringem Abrieb und geringer Geräuschbildung gerade in dem empfindlichen ersten Lebensabschnitt eines Reifen weiterhin ermöglicht. Erst mit zunehmender Lebensdauer kommen aufgrund des Abriebs die Nuten in der Einschnittwand - jedoch ohne Unstetigkeiten im radialen Verlauf - in Eingriff mit der Straßenoberfläche. Dabei kommt die Nut mit zunehmender Lebensdauer und ohne Unstetigkeiten mit ihrer langsam veränderten, wirksamen Nuttiefe in Kontakt zur Straßenoberfläche. Hierdurch kann sehr zuverlässig über die Lebensdauer des Reifen ein ungewünschter Abriss im Übergang zwischen Nut und radial oberhalb und radial unterhalb der Nut ausgebildetem Erstreckungsbereich des Feineinschnittes vermieden werden, was sich positiv auf das Abriebbild auswirkt. Die Ausformung des Feineinschnitts und der in der Einschnittswand ausgebildeten Nut wird durch diese fließenden Übergänge ohne Hinterschneidungen optimiert ohne Gefahr des Einreißens ermöglicht. Dabei ist im Feineinschnitt über einen großen Erstreckungsabschnitt des Feineinschnitts die für die Griffwirkung auf Schnee und Eis optimale Feineinschnittsdicke umsetzbar. Die Ausbildung des Feineinschnittes mit den Verdickungen in Form dieser Nuten in einer Seitenwand ermöglicht eine gezielte Bereitstellung zusätzliche Oberfläche und Raum innerhalb des Feineinschnittes zur optimierten Wärmeableitung. Die Wärmeableitung durch im Feineinschnitt befindliche Luft oder Wasser wird dabei durch die in radialer Richtung nach innen und außen fließenden Übergänge der Nuten und hierdurch begünstigten störungsfreien Strömungen begünstigt. Somit können trotz geringer üblicher Feineinschnittsdicke und somit bei weiterhin gutem Void zusätzliche Kühleigenschaften im Bereich der Feineinschnitte ermöglicht werden, ohne dabei Abrieb oder Rollwiderstand zu beeinträchtigen. Somit kann der Fahrzeugluftreifen für Wintereignung optimiert werden und dennoch hinsichtlich seines Einsatzes bei höheren Temperaturen verbessert werden.

Besonders vorteilhaft ist die Ausbildung eines Fahrzeugreifens gemäß den Merkmalen von Anspruch 2, wobei der radial äußere Erstreckungsabschnitt der Nut unmittelbar an den radial inneren Erstreckungsabschnitt der Nut anschließt. Hierdurch kann die Ausdehnung der Nut optimal zur Umsetzung guter Entformbarkeit bei guten Abriebeigenschaften genutzt werden.

Besonders vorteilhaft ist die Ausbildung eines Fahrzeugreifens gemäß den Merkmalen von Anspruch 3, wobei der die Nut nach radial innen hin begrenzende Nutanfang in Einschnittwand in einer Position im in radialer Richtung R nach außen hin gemessenen Abstand H₃ > 0 vom Einschnittgrund ausgebildet ist. Hierdurch kann bei guter Entformbarkeit, guter Kühl- und Abriebeigenschaften die Möglichkeit von Rissbildungen weiter reduziert werden.

Besonders vorteilhaft ist die Ausbildung eines Fahrzeugreifens gemäß den Merkmalen von Anspruch 4, wobei die maximale Tiefe T_{MAX} mit 0,3mm≤ T_{MAX} ≤1mm ausgebildet ist. Dies ermöglicht in einfacher Weise die Umsetzung eines ausreichend wirksamen Kühleffekts bei zur Erzielung guter Abriebeigenschaften ausreichend geringem NegativAnteil (Void) und bei zur Erzielung guter Handling-Eigenschaften ausreichender Blocksteifigkeit.

Besonders vorteilhaft ist die Ausbildung eines Fahrzeugreifens gemäß den Merkmalen von Anspruch 5, wobei die Nut längs ihrer radialen Erstreckung von innen nach außen im radial inneren Erstreckungsabschnitt in ihrem Tiefenverlauf ausgehend von einer Position mit T=0 bis zur Position der maximalen Tiefe T_{MAX} mit degressiv zunehmender Tiefe und im radial äußeren Erstreckungsabschnitt ausgehend von der Position ihrer maximalen Tiefe T_{MAX} bis zur Erreichung Position der Tiefe T=0 mit progressiv abnehmender Tiefe ausgebildet ist. Hierdurch kann die zur Kühlung wirksame Ausdehnung der Nut optimiert und dabei Rissbildungen im Erstreckungsbereich der Nut vermieden werden.

Besonders vorteilhaft ist die Ausbildung eines Fahrzeugreifens gemäß den Merkmalen von Anspruch 6, wobei die Position der maximalen Tiefe T_{MAX} im mittleren Drittel der radialen Erstreckungslänge H₂ der Nut ausgebildet ist. Hierdurch sind die Erstreckungsbereiche der Tiefenveränderung ausreichend groß, um die Vorteile der Nut in einfacher Weise optimiert umsetzen zu können.

Besonders vorteilhaft für eine optimierte Wärmeabfuhr ist die Ausbildung eines Fahrzeugreifens gemäß den Merkmalen von Anspruch 7, wobei die Nut mit ihrer Haupterstreckungsrichtung in der Einschnittwand unter Einschluss eines Neigungswinkels α zur radialen Richtung R des Reifens mit 0°≤α≤20° ausgerichtet ist.

Besonders vorteilhaft ist die Ausbildung eines Fahrzeugreifens gemäß den Merkmalen von Anspruch 8, wobei längs der Erstreckung des Feineinschnitts in der radial äußeren Oberläche in einer Einschnittwand mehrere derartige Nuten verteilt hintereinander angeordnet sind, wobei benachbart hintereinander angeordnete Nuten einer Einschnittwand mit in der Einschnittwand gemessenem Abstand d mit 3mm≤d≤20mm zueinander positioniert sind. Durch diese Ausbildung ist eine optimierte Gesamtkühlleistung des Feineinschnitts einfach möglich.

Besonders vorteilhaft ist die Ausbildung eines Fahrzeugreifens gemäß den Merkmalen von Anspruch 9, wobei in beiden Einschnittwänden derartige Nuten ausgebildet sind. Hierdurch kann eine Kühlung beider Seiten des durch den Feineinschnitt getrennten Profilblocks und somit eine weitere Optimierung der Kühlung des Profilblocks umgesetzt werden.

Besonders vorteilhaft ist die Ausbildung eines Fahrzeugreifens gemäß den Merkmalen von Anspruch 10, wobei H₁ mit 0,5mm ≤ H₁≤1mm ausgebildet ist.

Besonders vorteilhaft ist die Ausbildung eines Fahrzeugreifens gemäß den Merkmalen von Anspruch 11, wobei H₃ mit 0,5mm ≤ H₃ ausgebildet ist.

Besonders vorteilhaft ist die Ausbildung eines Fahrzeugreifens gemäß den Merkmalen von Anspruch 12, wobei die Nut mit einer in der Einschnittwand gemessenen Breite B mit 1mm ≤ B≤5mm ausgebildet ist. Die Breite ermöglicht dabei eine gute Ausformbarkeit bei optimierter Kühlwirkung.

Besonders vorteilhaft ist die Ausbildung eines Fahrzeugreifens gemäß den Merkmalen von Anspruch 13, wobei der Feineinschnitt in wenigstens eine Rille mündet. Hierdurch kann der Griff bei winterlichen Straßenbedingungen verbessert werden.

Die Erfindung wird im Folgenden an Hand der in den Figuren 1 bis 6 dargestellten Ausführungsbeispiele näher erläutert. Hierin zeigen
- Fig.1: einen Umfangsabschnitt eines Laufstreifenprofils eines Pkw-Reifens in Draufsicht,
- Fig.2: einen Abschnitt des Laufstreifenprofils von Fig.1 in Draufsicht,
- Fig.3: die Darstellung eines Profilblockelementes von Fig.2 in Schnittdarstellung gemäß Schnitt III-III von Fig.2,
- Fig.4: das Profilblockelement von Fig.2 in Schnittdarstellung gemäß Schnitt IV-IV von Fig.2,
- Fig.5: das Profilblockelement von Fig.2 in Schnittdarstellung gemäß Schnitt V-V von Fig.2 und
- Fig.6: das Profilblockelement von Fig.2 in Schnittdarstellung gemäß Schnitt VI-VI von Fig.2.

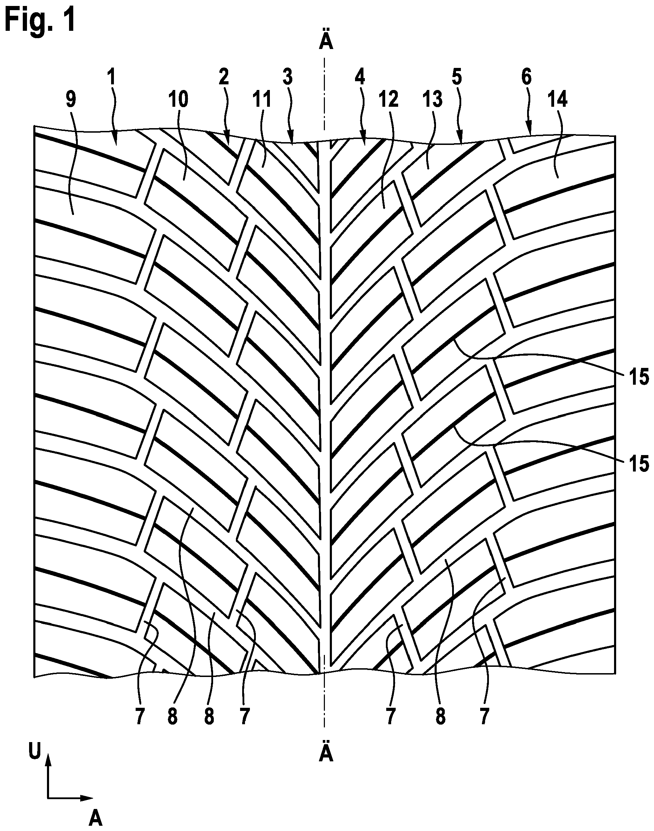

Die Figuren 1 bis 6 zeigen ein Laufstreifenprofil eines Fahrzeugluftreifens eines Personenkraftwagens (Pkw), das in bekannter Weise aus in axialer Richtung A des Fahrzeugluftreifens nebeneinander angeordneten Profilblockreihen 1, 2, 3, 4, 5 und 6 ausgebildet ist. Die Profilblockreihen 1, 2, 3, 4, 5 und 6 erstrecken sich jeweils in Umfangsrichtung U des Fahrzeugluftreifens über dessen gesamten Umfang. In Figur 1 ist die Äquatorebene Ä-Ä des Fahrzeugluftreifens eingezeichnet.

Die Profilblockreihen 1 und 6 sind jeweils in einer Reifenschulter ausgebildet und bilden die Schulterprofilblockreihen. Die Profilblockreihe 1 ist in bekannter Weise aus über den Umfang des Fahrzeugluftreifens verteilten, in Umfangsrichtung U hintereinander angeordneten und jeweils durch Querrillen 8 voneinander beabstandeten Profilblockelementen 9 ausgebildet. Die Profilblockreihe 2 ist in bekannter Weise aus über den gesamten Umfang des Fahrzeugluftreifens verteilten, in Umfangsrichtung U hintereinander angeordneten und jeweils durch Querrillen 8 voneinander getrennten Profilblockelementen 10 ausgebildet. Die Profilblockreihe 3 ist in bekannter Weise aus über den gesamten Umfang des Fahrzeugluftreifens verteilten, in Umfangsrichtung U hintereinander angeordneten und jeweils durch Querrillen 8 voneinander getrennten Profilblockelementen 11 ausgebildet. Die Profilblockreihe 4 ist in bekannter Weise aus über den gesamten Umfang des Fahrzeugluftreifens verteilten, in Umfangsrichtung U hintereinander angeordneten und jeweils durch Querrillen 8 voneinander getrennten Profilblockelementen 12 ausgebildet. Die Profilblockreihe 5 ist in bekannter Weise aus über den gesamten Umfang des Fahrzeugluftreifens verteilten, in Umfangsrichtung U hintereinander angeordneten und jeweils durch Querrillen 8 voneinander getrennten Profilblockelementen 13 bekannter Art ausgebildet. Die Profilblockreihe 14 ist in bekannter Weise aus über den gesamten Umfang des Fahrzeugluftreifens verteilten, in Umfangsrichtung U hintereinander angeordneten und jeweils durch Querrillen 8 voneinander getrennten Profilblockelementen 14 ausgebildet.

Die Profilblockreihe 1 und die Profilblockreihe 2 sind in axialer Richtung A des Fahrzeugluftreifens nebeneinander angeordnet, wobei die Profilblockelemente 9 der Profilblockreihe 1 und die Profilblockelemente 10 der Profilblockreihe 2 in axialer Richtung A durch umfangsorientierte Rillen 7 voneinander getrennt sind. Die Profilblockreihe 2 und die Profilblockreihe 3 sind in axialer Richtung A des Fahrzeugluftreifens nebeneinander angeordnet, wobei die Profilblockelemente 10 der Profilblockreihe 2 und die Profilblockelemente 11 der Profilblockreihe 3 durch umfangsorientierte Rillen 7 voneinander getrennt sind. Die Profilblockreihe 3 und die Profilblockreihe 4 sind in axialer Richtung A des Fahrzeugluftreifens nebeneinander angeordnet, wobei die Profilblockelemente 11 der Profilblockreihe 3 und die Profilblockelemente 12 der Profilblockreihe 4 durch umfangsorientierte Rillen 7 voneinander getrennt sind. Die Profilblockreihe 4 und die Profilblockreihe 5 sind in axialer Richtung A des Fahrzeugluftreifens nebeneinander angeordnet, wobei die Profilblockelemente 12 der Profilblockreihe 4 und die Profilblockreihe 13 der Profilblockreihe 5 in axialer Richtung A durch umfangsorientierte Rillen 7 voneinander getrennt sind. Die Profilblockreihe 5 und die Profilblockreihe 6 sind in axialer Richtung A nebeneinander angeordnet, wobei die Profilblockelemente 13 der Profilblockreihe 5 und die Profilblockreihe 14 der der Profilblockreihe 6 durch umfangsorientierte Rillen 7 in axialer Richtung A des Fahrzeugluftreifens voneinander getrennt sind.

Die umfangsorientierten Rillen 7, welche die Profilblockelemente 11 und die Profilblockelemente 12 voneinander trennen, bilden eine in Umfangsrichtung U des Fahrzeugluftreifens ausgerichtete, über den gesamten Umfang des Fahrzeugluftreifens erstreckte Umfangsrille.

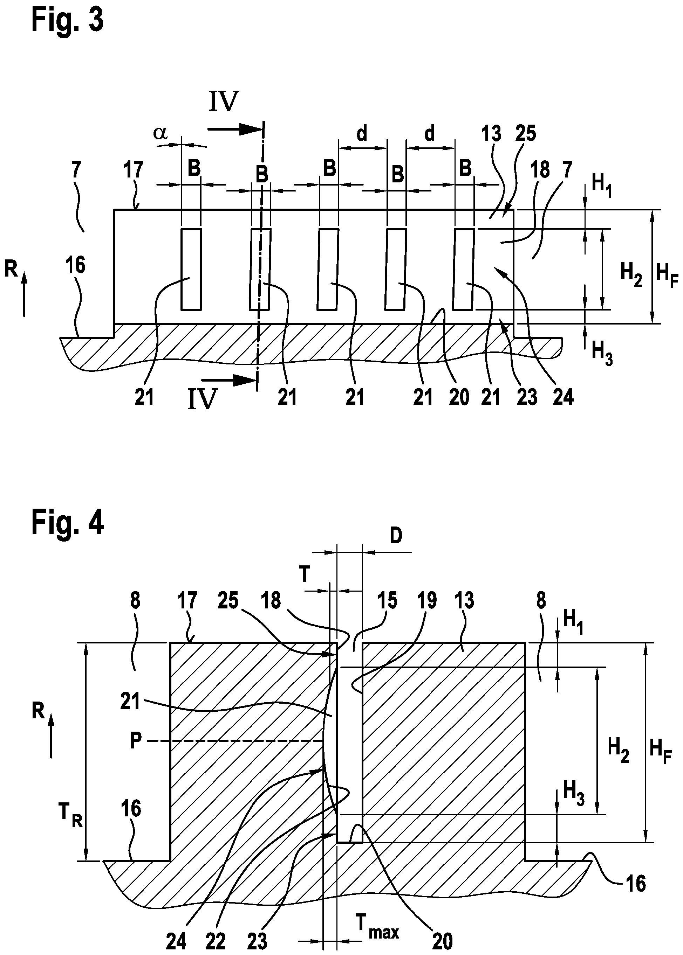

Wie in den Figuren 3 bis 6 am Beispiel eines Profilblockelementes 13 dargestellt ist, werden die Profilblockelemente 9, 10, 11, 12, 13 und 14 in radialer Richtung R des Fahrzeugluftreifens nach außen hin jeweils durch eine radial äußere Oberfläche 17 begrenzt, welche innerhalb der Bodenaufstandsbreite des Fahrzeugluftreifens die Straßenkontaktoberfläche des Reifens bildet.

Die Profilblockelemente 9, 10, 11, 12, 13 bzw. 14 sind in ihrer radial äußeren Oberfläche 17 jeweils mit Feineinschnitten 15 ausgebildet. Diese erstrecken sich parallel zu den das jeweilige Profilblockelement 9, 10, 11, 12, 13 bzw. 14 begrenzenden Querrillen 8 durch das Profilblockelement 9, 10, 11, 12, 13 bzw. 14 und münden in die das jeweilige Profilblockelement 9, 10, 11, 12, 13 bzw.14 begrenzenden Umfangsrillen 7.

Die Umfangsrillen 7 und die Querrillen 8 werden in radialer Richtung R nach innen hin jeweils durch einen Rillengrund 16 begrenzt. Die Umfangsrillen 7 und die Querrillen 8 sind dabei mit einer ausgehend von der radial äußeren Oberfläche 17 der jeweils angrenzenden Profilblockelemente 9, 10, 11, 12, 13 und 14 in radialer Richtung R bis zum Rillengrund 16 bemessenen Rillentiefe T_{R} ausgebildet, wobei die Rillentiefe mit 6mm ≤ T_{R} ≤ 10mm ausgebildet ist.

Wie in den Figuren 3 bis 6 anhand eines Feineinschnitts 15 eines Profilblockelementes 13 dargestellt ist, sind die Feineinschnitte 15 in radialer Richtung R nach innen hin jeweils durch einen Einschnittsgrund 20 begrenzt und mit einer Einschnittstiefe H_{F} ausbildet, welche in radialer Richtung R ausgehend von der radial äußeren Oberfläche 17 bis zum Einschnittsgrund 20 bemessen wird. Der Feineinschnitt 15 ist dabei beiderseits des Einschnittsgrundes 20 jeweils von einer Einschnittswand 18 bzw.19 begrenzt. Die Einschnittswand 18 begrenzt den Feineinschnitt 15 dabei auf einer Seite des Einschnittsgrundes 20. Die Einschnittswand 19 begrenzt den Feineinschnitt 15 auf der anderen Seite des Einschnittsgrundes 20. Die Einschnittswände 18 und 19 erstrecken sich längs der gesamten Erstreckung des Feineinschnittes 15 in der radial äußeren Oberfläche 17 und in radialer Richtung R ausgehend vom Feineinschnittsgrund 20 bis zur radial äußeren Oberfläche 17.

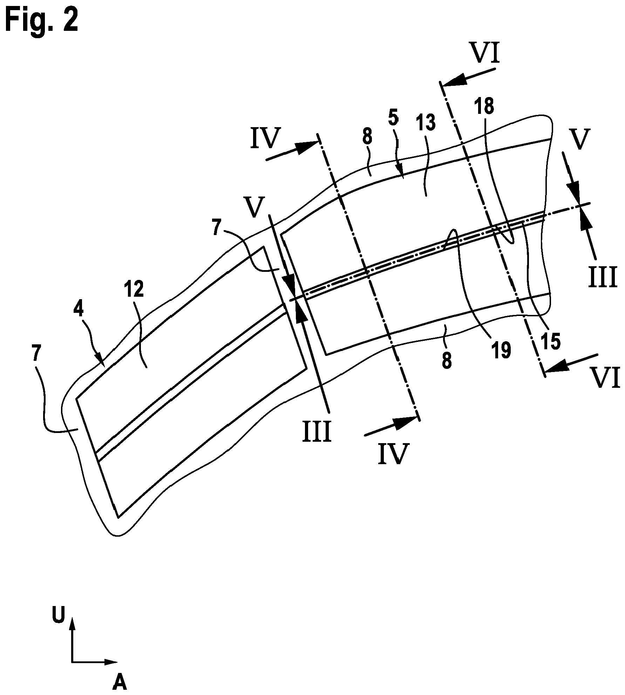

Wie in den Figuren 3 und 4 zu erkennen ist, ist die Einschnittswand 18 längs der Erstreckung des Feineinschnitts 15 in der radial äußeren Oberfläche 17 ausgehend von der radial äußeren Oberfläche 17 in einem radial äußeren Erstreckungsabschnitt 25 der in radialer Richtung R gemessenen Erstreckungshöhe H₁ längs ihrer gesamten Erstreckung im Wesentlichen plan ausgebildet. Ebenso ist die Einschnittswand 18 in einem radial inneren Erstreckungsabschnitt 23 der in radialer Richtung R gemessenen Erstreckungshöhe H₃, welche vom Einschnittsgrund 20 nach radial außen hin bemessen wird, mit einer längs ihrer Erstreckung in Erstreckungsrichtung des Feineinschnitts 15 in der radial äußeren Oberfläche 17 im Wesentlichen planen Oberfläche 17 ausgebildet. Zwischen dem radial äußeren Erstreckungsabschnitt 23 und dem radial inneren Erstreckungsabschnitt 25 ist die Einschnittswand 13 mit ihrem mittleren Erstreckungsabschnitt 24, welcher den radialen Haupterstreckungsabschnitt der Einschnittswand 18 bildet und sich über eine Erstreckungshöhe H₂ in radialer Richtung erstreckt, ausgebildet. Wie in Fig. 2 und in Fig. 3 zu erkennen ist, ist die Einschnittswand 18 längs der Erstreckung des Feineinschnitts 15 in der radial äußeren Oberfläche 17 in dem mittleren Erstreckungsabschnitt 24 mit mehreren in Erstreckungsrichtung des Feineinschnitts 15 in der radial äußeren Oberfläche 17 hintereinander angeordneten und voneinander beabstandeten Nuten 21 ausgebildet, welche sich mit ihrer Haupterstreckungsrichtung in radialer Richtung R des Fahrzeugluftreifens über die gesamte Erstreckungshöhe H₂ des mittleren Erstreckungsabschnitts 24 erstrecken. Die Nuten 21 sind in der Einschnittswand 18 jeweils längs ihrer Haupterstreckungsrichtung mit einer Breite B ausgebildet. Benachbarte Nuten 21 sind in der Einschnittswand 18 jeweils im Abstand d zueinander angeordnet. Die Nuten 21 sind mit einer senkrecht zur Einschnittswand 18 gemessenen Tiefe T ausgebildet und von einem Nutgrund 22 begrenzt. Wie in Fig.4 zu erkennen ist, ist die Nuttiefe T am radialen äußeren Erstreckungsende der Nut 21 und am radial inneren Erstreckungsende der Nut 21 jeweils mit T = 0 mm ausgebildet. Ausgehend vom radial inneren Erstreckungsende nimmt die Nuttiefe T längs der Erstreckung der Nut 21 in radialer Richtung R nach außen hin bis zu einer Position eines Punktes P degressiv steigend zu und erreicht im Punkt P ihren maximalen Wert Tₘₐₓ. Ab der Position des Punktes P in radialer Richtung R nach außen hin nimmt die Nuttiefe T progressiv steigend ab und erreicht ihr Minimum mit T = 0 mm am radial äußeren Erstreckungsende der Nut 21.

Wie in Figur 4 zu erkennen ist, ist der Nutgrund 22 in den senkrecht Einschnittwand 18 gebildeten Schnittebenenen längs der Haupterstreckungsrichtung der Nut 21 dabei mit einer gekrümmten, beispielsweise kreisbogenförmige Schnittkonturlinie ausgebildet.

Der Punkt P ist dabei im mittleren Erstreckungsdrittel des mittleren Erstreckungsabschnitts 24 der Erstreckungshöhe H₂ ausgebildet. Im dargestellten Ausführungsbeispiel ist der Punkt P in der Positionder halben Erstreckunghöhe H₂von ausgebildet. Die in radialer Richtung R zwischen radial äußerer Oberfläche 17 und Feineinschnittsgrund 20 gemessene Feineinschnittstiefe H_{F} ist mit H_{F} = H₁ + H₂ + H₃ ausgebildet mit 5mm ≤ H_{F} ≤ 10mm.

Die Höhe H₁ ist bei Neureifen mit 0,5mm ≤ H₁ ≤ 1mm ausgebildet. Die Höhe H₂ ist mit 4mm ≤ H₂ ≤ 9mm ausgebildet. Die Höhe H₃ ist mit 0,5mm ≤ H₃, beispielsweise mit H₃=1mm ausgebildet.

Die Tiefe Tmax ist mit 0,3mm ≤ Tₘₐₓ ≤ 1mm gewählt. Beispielsweise ist Tmax = 0,5mm ausgebildet.

Die Breite B der Nut 21 ist mit 1 mm ≤ B ≤ 5 mm - beispielweise mit B = 2 mm - ausgebildet.

Die Abstände d zwischen benachbarten Nuten sind mit 3 mm ≤ d ≤ 20 mm - beispielsweise mit d = 5 mm - ausgebildet.

Die Feineinschnitte 15 sind mit einer in der radial äußeren Oberfläche 17 gemessenen Feineinschnittsdicke D mit 0,3mm ≤ D ≤ 2mm - beispielsweise mit D = 0,6mm - ausgebildet. Im Erstreckungsbereich der Nuten 21 ist der Feineinschnitt 15 aufgrund der Tiefenerstreckung der Nut 21 mit einer wirksamen Dicke D' mit D'=(T+D) > D ausgebildet.

Die Rillen 7 und 8 sind mit Rillenbreiten 2mm bis 8mm ausgebildet.

Wie in Figur 3 dargestellt ist, sind die Nuten 21 in ihrer Haupterstreckungsrichtung in der Einschnittswand 18 längs ihrer Erstreckung von radial innen nach radial außen hin unter Einschluss eines Neigungswinkels α mit 0°≤ α ≤ 20° zur radialen Richtung R ausgerichtet. Im dargestellten Ausführungsbeispiel ist α = 0° gewählt.

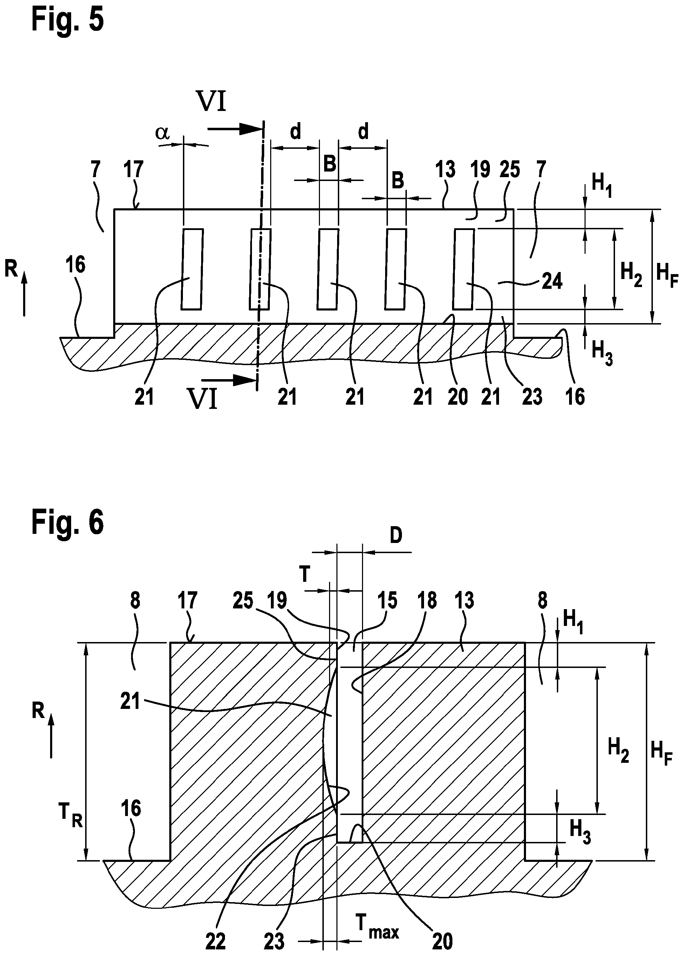

Wie in den Figuren 5 und 6 dargestellt ist, ist auch die Einschittswand 19 in analoger Weise längs ihrer radialen Erstreckung mit einem radial inneren Erstreckungsabschnitt 23 der Erstreckungshöhe H₃, mit einem mittleren Erstreckungsabschnitt 24 der Ersreckungshöhe H₂ und mit einem radial äußeren Erstreckungsabschnitt 25 der Höhe H₁ ausgebildet. Dabei ist die Einschnittswand 19 innerhalb des Erstreckungsabschnittes 25 und innerhalb des Erstreckungsabschnittes 23 jeweils im Wesentlichen plan und innerhalb des Erstreckungsabschnitts 24 mit analog zu den in den Figuren 3 und 4 dargestellten und oben beschriebenen Nuten 21 ausgebildet.

Dabei sind in den dargestellten Ausführungsbeispielen die Nuten 21 der Einschnittwand 18 jeweils längs der Haupterstreckung des Feineinschnittes 15 in der radial äußeren Oberfläche 17 versetzt zu den Nuten 21 der Einschnittswand 19 positioniert. Dabei ist jeweils ein Einschnitt 21 der Einschnittwand 18 zwischen der Position zweier benachbarter Nuten 21 der Einschnittwand 19 und ein Einschnitt 21 der Einschnittwand 19 zwischen der Position zweier benachbarter Nuten 21 der Einschnittwand 18 ausgebildet.

In anderer nicht dargestellter Ausführung ist jeweils längs der Haupterstreckung des Feineinschnittes 15 in der radial äußeren Oberfläche 17 ein Einschnitt 21 der Einschnittwand 19 in gleicher Position des Feineinschnitts 15 wie ein Einschnitt 21 der Einschnittwand 19 positioniert.

Auch wenn die Ausbildung der Feineinschnitte 15 anhand der Figuren 2 bis 6 und der o. g. Beschreibung im Zusammenhang mit Feineinschnitten 15 der Profilblockreihe 5 beschrieben sind, sind diese in einer Ausführung in analoger Weise auch in allen anderen Profilblockreihen 1, 2, 3, 4 und 6 mit entsprechenden Nuten 21 ausgebildet.

In weiterer, nicht dargestellter Ausführung sind lediglich in einigen - beispielsweise in drei - der Profilblockreihen 1, 2, 3, 4, 5 und 6 die Feineinschnitte 15 mit derartigen Nuten 21 ausgebildet und die anderen Profilblockreihen nicht.

In anderer Ausführung sind lediglich die Feineinschnitte 15 der Profilblockreihe 5 mit derartigen Nuten 21 ausgebildet und die Feineinschnitte 15 der Profilblockreihen 1,2,3,4 und 6 nicht.

### Bezugszeichenliste

### (Teil der Beschreibung)

- 1: Blockreihe
- 2: Blockreihe
- 3: Blockreihe
- 4: Blockreihe
- 5: Blockreihe
- 6: Blockreihe
- 7: Umfangsrille
- 8: Querrille
- 9: Blockelement
- 10: Blockelement
- 11: Blockelement
- 12: Blockelement
- 13: Blockelement
- 14: Blockelement
- 15: Feineinschnitt
- 16: Rillengrund
- 17: Radial äußere Oberfläche
- 18: Einschnittwand
- 19: Einschnittwand
- 20: Einschnittgrund
- 21: Nut
- 22: Nutgrund
- 23: Abschnitt
- 24: Abschnitt
- 25: Abschnitt

## Patentansprüche

1. Laufstreifenprofil eines Fahrzeugreifens - insbesondere eines PKW-Fahrzeugreifens - mit durch Rillen (7,8) begrenzten Profilelementen (13) und mit in Profilelementen (13) ausgebildeten Feineinschnitten (15), wobei die Profilelemente (13) in radialer Richtung R nach außen hin von einer radial äußeren Oberfläche (17) und die Feineinschnitte (15) nach radial innen hin von einem Einschnittgrund (20) und beiderseits des Einschnittgrunds (20) jeweils von einer Einschnittwand (18,19) begrenzt werden, wobei der Feineinschnitt (15) jeweils mit einer Dicke D ausgebildet ist, mit Feineinschnitten (15), die mit voneinander, vom Einschnitttgrund (20) und von der radial äußeren Oberflächen (17) beabstandet angeordneten, begrenzten Erstreckungsabschnitten ausgebildet sind, in denen der Feineinschnitt (15) mit einer vergrößerten Dicke D' ausgebildet ist, wobei der begrenzte Erstreckungsabschnitt jeweils durch eine in einer (18) der beiden Einschnittwände (18,19) in radialer Richtung R erstreckte Nut (21) mit einer in radialer Richtung R in der Einschnittwand (18) gemessenen Erstreckungslänge H₂ ausgebildet ist, die sich in radialer Richtung R nach außen in der Einschnittwand (18) bis in eine Position im Abstand H₁ > 0 von der radial äußeren Oberfläche (17) erstreckt und dort endet,
**dadurch gekennzeichnet,**
**dass** die Nut (21) mit einer senkrecht zur Einschnittwand (18) gemessenen, längs der Erstreckung der Nut (21) veränderten Tiefe T ausgebildet ist, wobei die Nut (21) mit einem radial inneren Erstreckungsabschnitt, in welchem die Tiefe T längs der Erstreckung der Nut (21) von radial innen nach außen hin von T=0 bis zur Erreichung der maximalen Tiefe T_{MAX} stetig zunimmt, und mit einem radial äußeren Erstreckungsabschnitt, in welchem die Tiefe T längs der Erstreckung der Nut (21) von radial innen nach außen hin von der Position ihrer maximalen Tiefe T_{MAX} bis zur Erreichung der Tiefe T=0 im Abstand H₁ von der radial äußeren Oberfläche (17) stetig abnimmt.

2. Laufstreifenprofil gemäß den Merkmalen von Anspruch 1,
wobei der radial äußere Erstreckungsabschnitt der Nut (21) unmittelbar an den radial inneren Erstreckungsabschnitt der Nut (21) anschließt.

3. Laufstreifenprofil gemäß den Merkmalen von Anspruch 1 oder 2,
wobei der die Nut (21) nach radial innen hin begrenzende Nutanfang in der Einschnittwand (18) in einer Position im in radialer Richtung R nach außen hin gemessenen Abstand H₃ > 0 vom Einschnittgrund (20) ausgebildet ist.

4. Laufstreifenprofil gemäß den Merkmalen von einem oder mehreren der vorangegangenen Ansprüche,
wobei die maximale Tiefe T_{MAX} mit 0,3mm≤ T_{MAX} ≤1mm ausgebildet ist.

5. Laufstreifenprofil gemäß den Merkmalen von einem oder mehreren der vorangegangenen Ansprüche,
wobei die Nut (21) längs ihrer radialen Erstreckung von innen nach außen im radial inneren Erstreckungsabschnitt in ihrem Tiefenverlauf ausgehend der Position mit T=0 bis zur Position (P) der maximalen Tiefe T_{MAX} mit degressiv zunehmender Tiefe und im radial äußeren Erstreckungsabschnitt ausgehend von der Position (P) ihrer maximalen Tiefe T_{MAX} bis zur Erreichung Position der Tiefe T=0 mit progressiv abnehmender Tiefe ausgebildet ist.

6. Laufstreifenprofil gemäß den Merkmalen von einem oder mehreren der vorangegangenen Ansprüche,
wobei die Position (P) der maximalen Tiefe T_{MAX} im mittleren Drittel der radialen Erstreckungslänge H₂ der Nut (21) ausgebildet ist.

7. Laufstreifenprofil gemäß den Merkmalen von einem oder mehreren der vorangegangenen Ansprüche,
wobei die Nut (21) mit ihrer Haupterstreckungsrichtung in der Einschnittwand (18) unter Einschluss eines Neigungswinkels α zur radialen Richtung R des Reifens mit 0°≤α≤20° ausgerichtet ist.

8. Laufstreifenprofil gemäß den Merkmalen von einem oder mehreren der vorangegangenen Ansprüche,
wobei längs der Erstreckung des Feineinschnitts (15) in der radial äußeren Oberfläche (17) in einer Einschnittwand (18) mehrere derartige Nuten (21) verteilt hintereinander angeordnet sind, wobei benachbart hintereinander angeordnete Nuten (21) einer Einschnittwand (18) mit in der Einschnittwand (18) gemessenem Abstand d mit 3mm≤d≤20mm zueinander positioniert sind.

9. Laufstreifenprofil gemäß den Merkmalen von einem oder mehreren der vorangegangenen Ansprüche,
wobei in beiden Einschnittwänden (18,19) derartige Nuten (21) ausgebildet sind.

10. Laufstreifenprofil gemäß den Merkmalen von einem oder mehreren der vorangegangenen Ansprüche,
wobei H₁ mit 0,5mm ≤ H₁≤1mm ausgebildet ist.

11. Laufstreifenprofil gemäß den Merkmalen von einem oder mehreren der vorangegangenen Ansprüche,
wobei H₃ mit 0,5mm ≤ H₃ ausgebildet ist.

12. Laufstreifenprofil gemäß den Merkmalen von einem oder mehreren der vorangegangenen Ansprüche,
wobei die Nut (21) mit einer in der Einschnittwand (18,19) gemessenen Breite B mit 1mm ≤ B≤5mm ausgebildet ist.

13. Laufstreifenprofil gemäß den Merkmalen von einem oder mehreren der vorangegangenen Ansprüche,
wobei der Feineinschnitt (15) in wenigstens eine Rille (7) mündet.
